# EUROPÄISCHE PATENTSCHRIFT

(11) **EP 3 820 732 B1**
(45) Veröffentlichungstag und Bekanntmachung des Hinweises auf die Patenterteilung: **29.09.2021**
(21) Anmeldenummer: 20705044.4
(22) Anmeldetag: 11.02.2020
(51) Int. Cl.: B60L 55/00, B60L 1/02, B60L 1/14

(54) **VERFAHREN ZUM KOORDINIEREN ZWEIER AKTUATOREINRICHTUNGEN, SCHNITTSTELLEINRICHTUNG, SERVEREINRICHTUNG ZUM BETREIBEN IM INTERNET, KRAFTFAHRZEUG, UND SYSTEM**
METHOD FOR COORDINATING TWO ACTUATOR DEVICES, INTERFACE DEVICE, SERVER DEVICE FOR OPERATING ON THE INTERNET, MOTOR VEHICLE AND SYSTEM
PROCÉDÉ POUR COORDONNER DEUX ENSEMBLES ACTIONNEURS, ENSEMBLE INTERFACE, ENSEMBLE SERVEUR POUR UN FONCTIONNEMENT SUR INTERNET, VÉHICULE AUTOMOBILE ET SYSTÈME

(30) Priorität: 12.02.2019 DE 102019201821
(43) Veröffentlichungstag der Anmeldung: 19.05.2021
(73) Patentinhaber: Audi AG, 85045 Ingolstadt (DE)
(72) Erfinder: RITTGER, Lena, 85051 Ingolstadt (DE); BELZ, Karsten, 85051 Ingolstadt (DE)
(86) Internationale Anmeldenummer: PCT/EP2020/053445
(87) Internationale Veröffentlichungsnummer: WO 2020/165155

(56) Entgegenhaltungen:
- DE-A1-102015 217 274
- Mark Kane: "Renault SYMBIOZ - The Car That Turns Into A Living Room For Your Home - Video", , 12. September 2017 (2017-09-12), XP055683344, Gefunden im Internet: URL:https://insideevs.com/news/335056/rena ult-symbioz-the-car-that-turns-into-a-livi ng-room-for-your-home-video/ [gefunden am 2020-04-06]

## Beschreibung

Die Erfindung betrifft ein Verfahren zum Koordinieren zweier Aktuatoreinrichtungen, wobei unter einer Aktuatoreinrichtung ein Gerät oder ein Geräteverbund mit mindestens einem Aktor, also mindestens einem Antriebselement, gemeint ist, das/der ein elektrisches Signal oder elektrische Signale in mechanische Bewegung oder eine andere physikalische Größe umsetzt. Eine Aktuatoreinrichtung kann beispielsweise ein Infotainmentsystem eines Kraftfahrzeugs sein, oder zum Beispiel eine Klimaanlage.

Heutige Kraftfahrzeuge sind für den Transport von Menschen und Material angedacht. Ist ein Benutzer gerade zu Hause, so wird das Kraftfahrzeug üblicherweise in der Nähe des Gebäudes geparkt, vorzugsweise vor dem Gebäude oder in einer Garage.

In dieser Zeit wird das Kraftfahrzeug meistens nicht genutzt. Wenn es genutzt wird, benutzt es der Benutzer, um von dem Gebäude, also einer Immobilie, wegzufahren.

Die US 2017/0072810 A1 beschreibt ein System und ein Verfahren zum Verwalten eines Betriebs einer fernkontrollierbaren Steuereinheit für ein Gerät in einem Gebäude während einer Stromspitze mit einem Gerät in einem mobilen Gerät, das in Kommunikation mit einem Kraftfahrzeug steht, das eine aufladbare Batterie hat, die in der Lage ist, Energie in ein Energienetz bereitzustellen.

Die CN 108536035 A beschreibt ein Verfahren zur Smart-Home-Steuerung eines Gebäudes.

Das Kraftfahrzeug ist für den Benutzer lediglich Transportmittel und wird nicht als Teil des Zuhauses empfunden. Dadurch kann das Kraftfahrzeug nur als Gebrauchsgegenstand hergenommen werden und ist für das Wohlempfinden des Benutzers nutzlos, wenn er das Kraftfahrzeug gerade nicht für eine Fahrt nutzt.

Die Dokumentation "Renault SYBIOZ - the car that turns into a living room for your home" (Mark Kane, https://insideevs.com/news/335056/renault-symbiozthe-car-that-turns-into-a-living-room-for-your-home-video/) beschreibt ein Kraftfahrzeug, das sicherstellt, dass das Zuhause und das KFZ Energie teilen.

Eine der Erfindung zugrundeliegende Aufgabe ist das Integrieren des Kraftfahrzeugs in den eigentlichen Wohnbereich.

Die gestellte Aufgabe wird durch das erfindungsgemäße Verfahren, die erfindungsgemäßen Vorrichtungen und das erfindungsgemäße System gemäß den nebengeordneten Patentansprüchen gelöst. Vorteilhafte Weiterbildungen ergeben sich durch die Unteransprüche.

Die Erfindung basiert auf der Idee, das Kraftfahrzeug und das Gebäude (oder einen Gebäudeteil) technisch aneinander anzupassen, sodass beide Bereiche gemeinsam optimal abgestimmt und genutzt werden können. Hierdurch ergibt sich eine Erweiterung des Wohnbereichs. Der Benutzer kann mit einer aus der Erfindung resultierenden automatischen Verbindung beider Bereiche (das heißt des Gebäudes/des Gebäudeteils und des Kraftfahrzeugs) optimal für sich nutzen. So entsteht für den Benutzer automatisch eine Erweiterung seiner Immobilie, beziehungsweise seines Fahrzeuginnenraums. Insbesondere in großen Städten kann so Wohnraum erweitert und dadurch Lebensraum gewonnen werden.

Das erfindungsgemäße Verfahren zum Koordinieren einer ersten Aktuatoreinrichtung und einer zweiten Aktuatoreinrichtung wird durch eine Schnittstelleneinrichtung durchgeführt, die eine Datenkommunikationsschnittstelle zwischen den beiden Aktuatoreinrichtungen bildet. Das erfindungsgemäße Verfahren kann auch als computerimplementiertes Verfahren bezeichnet werden. Unter einer Schnittstelleneinrichtung wird dabei ein Gerät oder eine Gerätekomponente verstanden, die zur Datenkommunikation eingerichtet ist und zum Beispiel als zur Datenkommunikation eingerichteten Steuergerät oder Steuerchip ausgestaltet sein kann. Gemäß dem erfindungsgemäßen Verfahren ist eine der Aktuatoreinrichtungen ein Kraftfahrzeugsystem und die andere Aktuatoreinrichtung ein kraftfahrzeugexternes Gerät, das an einem Bauwerk oder Gebäude angeordnet ist, also zum Beispiel an dem Bauwerk oder Gebäude angebracht sein kann oder sich in dem Bauwerk befinden kann.

Durch die Schnittstelleneinrichtung erfolgt ein Feststellen einer aktuellen Konfiguration der ersten Aktuatoreinrichtung und, in Abhängigkeit von der festgestellten Konfiguration, ein Festlegen der zweiten Aktuatoreinrichtung als an die festgestellte Konfiguration der ersten Aktuatoreinrichtung anzupassende Aktuatoreinrichtung. Ist die erste Aktuatoreinrichtung beispielsweise ein Infotainmentsystem des Kraftfahrzeugs und die festgestellte Konfiguration zum Beispiel eine Einstellung, welcher Musiksender oder welche Musikrichtung gerade im Kraftfahrzeug gespielt wird, kann als zweite Aktuatoreinrichtung zum Beispiel eine Stereoanlage oder ein Infotainmentsystem in dem Gebäude, zum Beispiel in einem Wohnzimmer, festgelegt werden.

Anhand der festgestellten Konfiguration der ersten Aktuatoreinrichtung erfolgt ein Festlegen von Einstellungsdaten zum Konfigurieren der zweiten Aktuatoreinrichtung, vorzugsweise der festgestellten Konfiguration zugeordneten Einstellungsdaten. Ist im Kraftfahrzeug beispielsweise ein Musiksender mit klassischer Musik eingestellt, können für die Stereoanlage im Wohnzimmer für eine solche Konfiguration Einstellungsdaten zugeordnet sein, die ebenfalls das Ausgeben von klassischer Musik beschreiben können. Die festgelegten Einstellungsdaten gemäß diesem Beispiel müssen aber nicht zwingend den gleichen Radiosender vorgeben, sondern können beispielsweise vorgeben, dass aus einer Musiksendung des Benutzers durch die Stereoanlage im Wohnzimmer ein Album von Beethoven abgespielt werden kann. Mit anderen Worten wird dadurch erreicht dass im Gebäude eine gleiche Atmosphäre oder ein gleiches Ambiente wie im Kraftfahrzeug eingestellt wird. Kommt der Benutzer von der Fahrt vom Büro also nach Hause, ist dort das gleiche Ambiente wie in dem Kraftfahrzeug, in dem er zuvor gesessen hat. Ist die erste Aktuatoreinrichtung das Gebäude, wird also beispielsweise festgestellt, dass im Wohnzimmer gerade klassische Musik eingestellt ist/war, kann durch das Konfigurieren des Infotainmentsystems des Kraftfahrzeugs auf die gleiche Musikrichtung erreicht werden, dass die aktuelle Stimmung des Benutzers aufgenommen wird und sich der Benutzer im Kraftfahrzeug wie zu Hause fühlt. Das Kraftfahrzeug wird als Wohnbereich wahrgenommen.

Durch die Schnittstelleneinrichtung erfolgt ein Erzeugen eines Steuersignals, das die festgelegten Einstellungsdaten beschreibt, und ein Übertragen des erzeugten Steuersignals an die zweite Aktuatoreinrichtung zum Konfigurieren der zweiten Aktuatoreinrichtung. Mit anderen Worten wird die zweite Aktuatoreinrichtung gesteuert. Mit anderen Worten erfolgt die Konfiguration der zweiten Aktuatoreinrichtung in Abhängigkeit von der festgestellten Konfiguration der ersten Aktuatoreinrichtung.

Es ergeben sich die oben genannten Vorteile.

Durch die zweite Aktuatoreinrichtung wird eine mechanische Aktion des Aktuators ausgelöst. Es erfolgt ein Festlegen einer Parkposition des Kraftfahrzeugs am Gebäude, zum Beispiel einer aktuellen Parkposition, oder es kann prädiziert werden, wo das Kraftfahrzeug bei Ankunft des Benutzers voraussichtlich parken wird. Anhand der festgelegten Parkposition erfolgt durch das übertragene Steuersignal ein Bewegen oder Steuern oder Verschieben einer Trennwandeinrichtung des Kraftfahrzeugs, wobei die Trennwandeinrichtung aus einer Ruheposition in eine Abschirmposition verstellt wird. In der Ruheposition kann dabei ein Wandelement der Trennwandeinrichtung an dem Kraftfahrzeug oder in dem Kraftfahrzeug angeordnet sein, und in der Abschirmposition kann sich das Wandelement zwischen dem Kraftfahrzeug und einer Wand des Gebäudes erstrecken und hierzu zum Beispiel ausgefahren werden. Unter einer Trennwandeinrichtung wird dabei eine Vorrichtung verstanden, die das Wandelement, also ein als Abtrennwand ausgestaltetes Element, aufweist. Optional kann das Wandelement dabei als Faltenbalg ausgestaltet sein. Dadurch kann der Benutzer, zum Beispiel bei schlechtem Wetter, durch das Wandelement von Wind und Regen abgeschirmt werden und so trockenen Fußes zum Gebäude gehen. Hierdurch kann dem Benutzer beim Aussteigen oder Einsteigen in das Kraftfahrzeug auch zum Beispiel ein überdachter Gang bereitgestellt werden oder ein abgeschirmter Bereich, der einen Wärmeverlust in der kalten Jahreszeit reduzieren kann. Ein weiterer Vorteil ist zum Beispiel, dass das Wandelement als Sichtschutz ausgestaltet sein kann, sodass Nachbarn nicht sehen können, wer aus dem Kraftfahrzeug aussteigt. Außerdem wirkt das Kraftfahrzeug so optisch als zusätzliches Zimmer.

Ist die zweite Aktuatoreinrichtung zum Beispiel eine Hebeeinrichtung einer Plattformvorrichtung des Gebäudes, wobei die Plattformvorrichtung zum Beispiel einen Motor, ein Steuergerät und eine verstellbare Stufe umfassen kann, kann das Steuern der zweiten Aktuatoreinrichtung das Einstellen einer Höhe der Plattformvorrichtung durch Ändern einer aktuellen Höhe der Plattformvorrichtung erfolgen. Es ergeben sich die bereits genannten Vorteile.

In einer zweiten Variante kann zusätzlich oder alternativ das kraftfahrzeugexterne Gerät eine Trennwandeinrichtung des Gebäudes oder eines Gebäudeteils sein, wobei das Steuern der zweiten Aktuatoreinrichtung das Festlegen der Parkposition des Kraftfahrzeugs am Gebäude umfassen kann, und das Bewegen der Trennwandeinrichtung anhand der festgelegten Parkposition. Auch gemäß dieser Ausführungsform kann die Trennwandeinrichtung aus einer Ruheposition in eine Abschirmposition verschoben, bewegt oder verfahren werden (und andersherum), wobei sich in der Ruheposition das Wandelement der Trennwandeinrichtung zwischen der festgelegten Parkposition und einer Wand des Gebäudes erstrecken kann. Vorzugsweise kann zusätzlich ein Bewegen eines Verkleidungselements der Trennwandeinrichtung erfolgen, zum Verkleiden des Trennwandelements. Ein Verkleidungselement kann zum Beispiel eine hübsch gestaltete Scheibe oder Abdeckung sein oder ein Sideboard, mit dem zum Beispiel ein als Faltenbalg ausgestaltetes Wandelement optisch kaschiert werden kann.

Das Steuern des Kraftfahrzeugsystems kann in einer Ausführungsform ein Einstellen einer Kraftfahrzeughöhe durch Ändern einer aktuellen Kraftfahrzeughöhe erfolgen, und zwar mittels einer Hebeeinrichtung des Kraftfahrzeugs, die in diesem Fall als Kraftfahrzeugsystem gesteuert werden kann. Unter eine Hebeeinrichtung des Kraftfahrzeugs wird ein Gerät oder eine Gerätekomponente zum Ändern einer Höhe des Kraftfahrzeugs verstanden, die optional hierzu einen Motor und ein Steuergerät aufweisen kann. Hierzu kann die Hebeeinrichtung zum Beispiel eine Luftfeder betreiben, die das Fahrzeug hochheben oder senken kann, sodass zum Beispiel die Kraftfahrzeugtür geringfügig über zum Beispiel einer Stufe des Gebäudes oder zum Beispiel einer Treppe geöffnet werden kann, der Benutzer also auf eine passenden Höhe zu der beispielhaften Stufe oder Treppe aussteigen kann. Dies ist besonders vorteilhaft, falls draußen viel Schnee liegt, sodass der Benutzer so zum Beispiel erst nicht durch den tiefen Schnee stapfen muss, oder wenn der Benutzer zum Beispiel ein älterer Mensch ist und Schwierigkeiten beim Steigen auf die Stufe hat.

Die Schnittstelleneinrichtung kann optional ein elektrisches Anbinden des Kraftfahrzeugs an das Gebäude ermöglichen. Hierbei kann durch die Schnittstelleneinrichtung ein elektrisches Verbinden einer Energiespeichervorrichtung des Gebäudes mit dem Kraftfahrzeugsystem erfolgen. Durch die Schnittstelleneinrichtung kann ein Aufladen einer Energiespeichereinrichtung des Kraftfahrzeugs gesteuert werden, und/oder ein Betreiben des Kraftfahrzeugsystems mittels von der Energiespeichervorrichtung des Gebäudes übertragenen Energie. Dabei kann vorzugsweise eine Klimaanlage des Kraftfahrzeugs betrieben werden, insbesondere zum Anpassen einer aktuellen Innentemperatur des Kraftfahrzeugs an eine aktuelle Innentemperatur des Gebäudes oder eines Gebäudeteils. Dies trägt deutlich zum Wohlbefinden des Benutzers bei und verstärkt auch das Gefühl, bei dem das Kraftfahrzeug als erweiterter Wohnraum wahrgenommen wird. Die Energiespeichervorrichtung des Gebäudes kann dabei einen Energiespeicher umfassen, zum Beispiel einen Akku oder eine Batterie, oder eine Stromquelle. Die Energiespeichereinrichtung des Kraftfahrzeugs kann dabei beispielsweise eine Traktionsbatterie sein.

Das Steuern der zweiten Aktuatoreinrichtung kann alternativ oder zusätzlich ein elektrisches Verbinden der Energiespeichereinrichtung des Kraftfahrzeugs mit der Energiespeichervorrichtung des kraftfahrzeugexternen Geräts umfassen. Optional kann hierzu ein Aufladen der Energiespeichervorrichtung des kraftfahrzeugexternen Geräts erfolgen, falls die Energiespeichervorrichtung zum Beispiel eine Batterie umfasst und das kraftfahrzeugexterne Gerät zum Beispiel ein solches, batteriebetriebenes Gerät ist. Alternativ oder zusätzlich kann in einer weiteren optionalen Variante ein Betreiben des kraftfahrzeugexternen Geräts mittels von der Energiespeichereinrichtung des Kraftfahrzeugs übertragenen Energie erfolgen, vorzugsweise eine Klimaanlage des Gebäudes, insbesondere zum Anpassen einer aktuellen Innentemperatur des Gebäudes oder eines Gebäudeteils an eine aktuelle Innentemperatur des Kraftfahrzeugs. Es ergeben sich die bereits genannten Vorteile.

Weitere Ausführungsformen des erfindungsgemäßen Verfahrens können ein elektronisches Anbinden oder Verbinden von Kraftfahrzeug und Gebäude umfassen. In einer Ausführungsform kann die zweite Aktuatoreinrichtung ein Infotainmentsystem des Kraftfahrzeugs umfassen, und das Steuern der zweiten Aktuatoreinrichtung kann zum Beispiel ein Anpassen einer aktuellen Innentemperatur des Kraftfahrzeugs an eine aktuelle Innentemperatur des Gebäudes oder eines Gebäudeteils umfassen. Alternativ oder zusätzlich kann ein Anpassen einer Innenraumbeleuchtung des Kraftfahrzeugs an eine aktuelle Innenraumbeleuchtung des Gebäudes oder eines Gebäudeteils erfolgen. Alternativ oder zusätzlich kann durch die Schnittstelleneinrichtung ein Anpassen eines Entertainmentprogramms im Innenraum des Kraftfahrzeugs an ein aktuelles Entertainmentprogramm im Gebäude oder in einem Gebäudeteil umfassen.

In der ersten Variante kann das Kraftfahrzeugsystem eine Klimaanlage sein, das zum Infotainmentsystem gehören kann. In der zweiten Variante kann über das Infotainmentsystem eine Beleuchtung gesteuert werden, und in der dritten Variante zum Beispiel ein Filmprogramm oder ein Musikprogramm. Die Varianten verstärken die bereits oben genannten Vorteile.

Umfasst die zweite Aktuatoreinrichtung ein Entertainmentsystem des Gebäudes, kann das Steuern der zweiten Aktuatoreinrichtung optional ein Anpassen einer aktuellen Innentemperatur des Gebäudes oder eines Gebäudeteils an eine aktuelle Innentemperatur des Kraftfahrzeugs umfassen. In weiteren optionalen Varianten kann die Innenraumbeleuchtung des Gebäudes an diejenige des Kraftfahrzeugs angepasst werden, oder ein Entertainmentprogramm. Es ergeben sich die bereits genannten Vorteile.

In einer besonders komfortablen Ausgestaltung des erfindungsgemäßen Verfahrens kann durch die Schnittstelleneinrichtung ein Erfassen eines Inhalts eines Kühlschrank und eines Inhalts eines Kühlschrank des kraftfahrzeugexternen Geräts durchgeführt werden, und ein Vergleichen der erfassten Inhalte. Die Schnittstelleneinrichtung kann eine Information zu einem Ergebnis des Vergleichs bereitstellen, die durch eine Ausgabevorrichtung ausgegeben werden kann. Die Ausgabevorrichtung kann dabei die Aktuatoreinrichtung des Kraftfahrzeugs und/oder des Gebäudes sein. Unter einer Ausgabevorrichtung wird dabei ein Gerät oder eine Gerätekomponente zum Ausgeben eines Audiosignals und/oder Bildsignals verstanden, das/die zum Beispiel einen Bildschirm und/oder einen Lautsprecher aufweisen kann.

Die oben gestellte Aufgabe wird gelöst durch eine Schnittstelleneinrichtung, die dazu eingerichtet ist, ein der oben beschriebenen Ausführungsformen des erfindungsgemäßen Verfahrens durchzuführen. Hierzu kann die Schnittstellenvorrichtung vorzugsweise eine Prozessoreinrichtung aufweisen, die mindestens einen Mikroprozessor und/oder mindestens einen Mikrocontroller aufweisen kann. Optional kann die Schnittstelleneinrichtung einen Datenspeicher aufweisen, in dem ein Programmcode abgelegt sein kann, der, bei Ausführen durch die Prozessoreinrichtung, die Schnittstelleneinrichtung dazu veranlasst, das erfindungsgemäße Verfahren durchzuführen.

Die oben gestellte Aufgabe wird gelöst durch eine Servereinrichtung zum Betreiben im Internet, die eine Ausführungsform der erfindungsgemäßen Schnittstelleneinrichtung aufweist. Die Servereinrichtung kann dabei vorzugsweise als Backend oder als Datenserver ausgestaltet sein, oder zum Beispiel als Daten-Cloud. Die Schnittstelleneinrichtung kann zum Beispiel als Computerprogramm oder als Steuerchip ausgestaltet sein.

Die oben gestellte Aufgabe wird gelöst durch ein Kraftfahrzeug, das eine Ausführungsform der erfindungsgemäßen Schnittstelleneinrichtung aufweist. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die oben gestellte Aufgabe wird gelöst durch ein Gebäude, also eine Immobilie, zum Beispiel ein Haus, wobei das Gebäude eine Ausführungsform der erfindungsgemäßen Schnittstelleneinrichtung aufweist.

Die oben gestellte Aufgabe wird gelöst durch ein System, das ein kraftfahrzeugexternes Gerät umfasst, das an einem Gebäude angeordnet ist, sowie eine Aktuatoreinrichtung eines Kraftfahrzeugs und eine Ausführungsform der erfindungsgemäßen Schnittstelleneinrichtung. Optional kann das System auch das Gebäude umfassen.

Zu der Erfindung gehören auch Weiterbildungen der erfindungsgemäßen Vorrichtungen und des erfindungsgemäßen Systems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Vorrichtungen und des erfindungsgemäßen Systems hier nicht noch einmal beschrieben.

Die Erfindung umfasst auch die Kombinationen der Merkmale der beschriebenen Ausführungsformen.

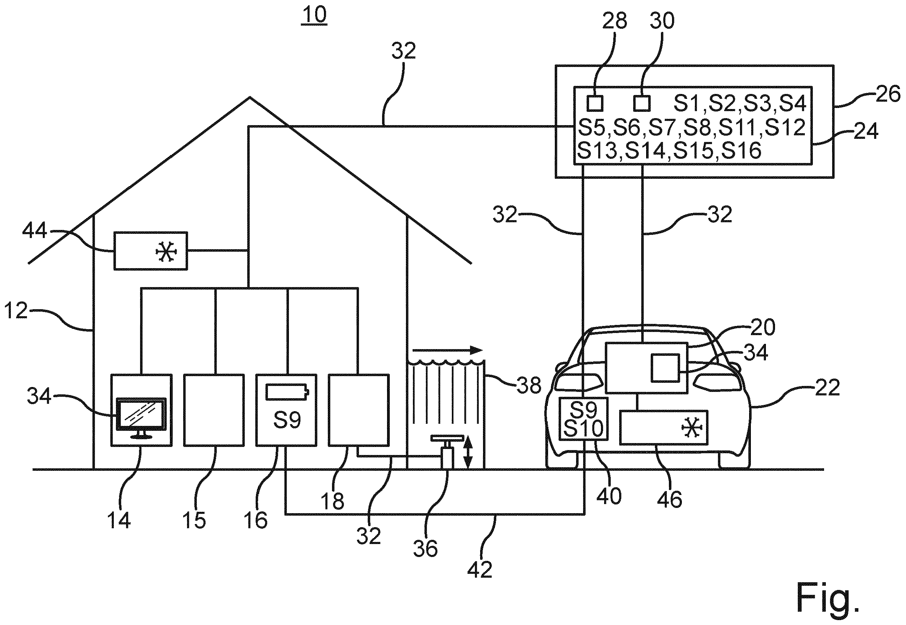

Im Folgenden sind Ausführungsbeispiele der Erfindung beschrieben. Hierzu zeigt die einzige Figur eine schematische Darstellung zu einem Ausführungsbeispiel des erfindungsgemäßen Verfahrens, des erfindungsgemäßen Systems und der erfindungsgemäßen Vorrichtungen.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In der Figur bezeichnen gleiche Bezugszeichen jeweils funktionsgleiche Elemente.

Die Figur veranschaulicht das Prinzip des erfindungsgemäßen Verfahrens, der erfindungsgemäßen Vorrichtungen und des erfindungsgemäßen Systems. Hierzu zeigt die Figur beispielhaft ein System 10, das beispielhaft mehrere Aktuatoreinrichtungen 14, 16, 18 aufweisen kann, die an dem Gebäude 12 angeordnet sind. Außerdem umfasst das System 10 mindestens eine Aktuatoreinrichtung 20 eines Kraftfahrzeugs 22. Das System 10 weist außerdem eine Schnittstelleneinrichtung 24 auf, die beispielhaft eine Komponente einer kraftfahrzeugexternen Servereinrichtung 26 sein kann. Die Servereinrichtung 26 kann zum Beispiel als Backend oder Datencloud ausgestaltet sein.

Bei einer Implementierung des Systems 10 können vorzugsweise mehrere Aktuatoreinrichtungen 14, 15, 16, 18, 20 in das Kraftfahrzeug 22 und/oder das Gebäude 12 implementiert werden, vorzugsweise stufenweise, das heißt das System kann nachgerüstet werden, indem weitere Aktuatoreinrichtungen 14, 15, 16, 18, 20 nachgerüstet werden oder schrittweise an die Schnittstelleneinrichtung 24 angeschlossen werden.

Die Schnittstelleneinrichtung 24 kann zum Beispiel als Steuerchip mit einer Prozessoreinrichtung 28 und einem Speichermedium 30 ausgestaltet sein, wobei die Prozessoreinrichtung 28 zum Beispiel mehrere Mikroprozessoren aufweisen kann und wobei das Speichermedium 30 zum Beispiel einen Programmcode zum Durchführen des erfindungsgemäßen Verfahrens aufweisen kann.

Alternativ kann die Schnittstelleneinrichtung 24 zum Beispiel als Adapter oder als Verwaltungsgerät ausgestaltet sein, das in der kraftfahrzeugexternen Servereinrichtung 26, dem Gebäude 12 oder dem Kraftfahrzeug 22 verortet worden sein kann. Alternativ kann die Schnittstelleneinrichtung 24 mehrere Komponenten aufweisen, die auf das Gebäude 12 und das Kraftfahrzeug 22 sowie die Servereinrichtung 26 verteilt sein können und miteinander kommunizieren können.

Die Schnittstelleneinrichtung 24 ist als Datenkommunikationsschnittstelle zwischen den Aktuatoreinrichtungen 14, 16, 18, 20 ausgestaltet und eingerichtet, und kann mit den Aktuatoreinrichtungen 14, 16, 18, 20 über zum Beispiel jeweils eine Datenkommunikationsverbindung 32 kommunizieren. Die Datenkommunikationsverbindung 32 kann zum Beispiel eine drahtgebundene Datenkommunikationsverbindung 32 sein, zum Beispiel ein Datenbus des Kraftfahrzeugs 22, falls die Schnittstelleneinrichtung 24 zum Beispiel im Kraftfahrzeug 22 verortet ist. Im Beispiel der Figur kann die Schnittstelleneinrichtung 24 jedoch vorteilhaft über drahtlose Datenkommunikationsverbindungen 32 mit den Aktuatoreinrichtungen 14, 16, 18, 20 kommunizieren, zum Beispiel über eine oder mehrere Mobilfunkverbindungen oder Internetverbindungen.

Die Aktuatoreinrichtung 14 des Gebäudes 12 kann zum Beispiel ein Entertainmentsystem sein, das zum Beispiel eine Stereoanlage, ein Radio und einen Bildschirm 34 umfassen kann. Die Aktuatoreinrichtung 15 des Gebäudes 12 kann zum Beispiel als Klimaanlage ausgestaltet sein, die an einem Heiz- und/oder Kühlsystem des Gebäudes 12 angeschlossen sein kann.

Zum optionalen Koppeln der Klimaanlage, also der Aktuatoreinrichtung 15, an das Kraftfahrzeug 22 kann die Aktuatoreinrichtung 15 optional einen Spannverschluss aufweisen, über den, bei einer Kopplung an das Kraftfahrzeug 22, zum Beispiel warmes Wasser in ein Leitungssystem des Kraftfahrzeugs 22 geleitet werden kann, um dieses zu wärmen, oder, zum Kühlen des Kraftfahrzeugs 22, ein Kältemittel.

Die Aktuatoreinrichtung 16 kann zum Beispiel als Energiespeichervorrichtung ausgestaltet sein und hierzu beispielsweise einen Energiespeicher und/oder eine Stromquelle aufweisen. Hierzu kann die Aktuatoreinrichtung 16 zum Beispiel zusätzlich eine Strombuchse aufweisen, an die das Kraftfahrzeug 22 angeschlossen werden kann.

Die Aktuatoreinrichtung 18 kann zum Beispiel ein Gerät zum Steuern einer Plattformvorrichtung 36 ausgestaltet sein, wobei die Plattformvorrichtung 36 zum Beispiel eine höhenverstellbare Stufe aufweisen kann. Zum Verstellen der beispielhaften Stufe der Plattformvorrichtung 36 kann die Aktuatoreinrichtung 18 zum Beispiel einen Motor aufweisen oder einen Motor betreiben. Die Aktuatoreinrichtung 18 kann dann beispielsweise als Steuergerät ausgestaltet sein.

Alternativ oder zusätzlich kann die Aktuatoreinrichtung 18 zum Beispiel eine Trennwandeinrichtung 38 steuern, wobei die Trennwandeinrichtung 38 zum Beispiel ein Wandelement aufweisen kann, das zum Beispiel als Paravent oder Faltenbalg ausgestaltet sein kann, also zum Beispiel ähnlich einer Gangway eines Flugzeugs.

Optional kann die Trennwandeinrichtung 38 zusätzlich ein Stirnbrett, Windbrett oder Sideboard aufweisen (in der Figur nicht gezeigt), das in einer Ruheposition zum Beispiel in der Hauswand gelagert sein kann und das in einer Abschirmposition das neben oder in dem Gebäude geparkte Kraftfahrzeug 22 abdecken oder abschirmen kann, sodass Nachbarn das Auto nicht sehen können. Ein solches als Windbrett oder Sideboard ausgestaltetes Verkleidungselement kann zum Beispiel ähnlich einer Tür ausgestaltet sein. Das Kraftfahrzeug 22 wirkt dann wie ein zusätzliches Zimmer. Ist ein solches Sideboard beispielsweise im Kraftfahrzeug 22 verbaut, kann dieses zum Beispiel in der Ruheposition in eine Schalttafel eingefahren sein und in einer ausgefahrenen Position als Ablagefläche benutzt werden. Das Kraftfahrzeug 22 wird so sehr viel wohnlicher.

Die Aktuatoreinrichtung 20 des Kraftfahrzeugs 22 kann zum Beispiel als Infotainmentsystem des Kraftfahrzeugs 22 ausgestaltet sein und hierzu zum Beispiel einen Bildschirm 34 aufweisen, sowie zum Beispiel eine Klimaanlage, ein Beleuchtungssystem und ein Musikabspielgerät.

Bei einer elektrischen Kopplung des Kraftfahrzeugs 22 an das Gebäude 12 kann hierzu das Kraftfahrzeug 22 zum Beispiel eine Energiespeichereinrichtung 40 aufweisen, die zum Beispiel als Traktionsbatterie ausgestaltet sein kann und die, ist das Kraftfahrzeug 22 zum Beispiel in der Garage geparkt, über ein Kabel 42 mit einer Strombuchse der Aktuatoreinrichtung 16 verbunden sein kann.

Im Beispiel der Figur kann zum Beispiel ein Benutzer des Kraftfahrzeugs 22 und des Gebäudes 12, das zum Beispiel sein eigenes Gebäude 12 sein kann oder das Gebäude 12 eines Freundes, gerade mit seinem Kraftfahrzeug 22 ankommen. In einem ersten Verfahrensschritt S1 stellt die Schnittstelleneinrichtung 24 zum Beispiel eine aktuelle Konfiguration des Infotainmentsystems als Aktuatoreinrichtung 20 des Kraftfahrzeugs 22 fest. Wird eine der Aktuatoreinrichtungen 14, 15, 16, 18 des Gebäudes 12 an die Aktuatoreinrichtung 20 des Kraftfahrzeugs 22 angepasst, so wird die Aktuatoreinrichtung 20 des Kraftfahrzeugs 22 die erste Aktuatoreinrichtung bezeichnet.

Als Konfiguration kann die Schnittstelleneinrichtung 24 zum Beispiel eine Höhe des Trittbretts, also des unteren Endes der Kraftfahrzeugtür, feststellen und in Abhängigkeit davon als zweite Aktuatoreinrichtung die Aktuatoreinrichtung 18, also das Steuergerät zum Steuern der Plattformvorrichtung 36 und/oder der Trennwandeinrichtung 38, festlegen (S2). Das Festlegen S2 kann zum Beispiel über eine digitale Zuordnungsliste erfolgen, oder durch eine Vorgabe, die der Benutzer zum Beispiel vor der Fahrt über ein Anwenderprogramm mit seinem mobilen Endgerät als Standardstellung eingegeben hat. Zum Konfigurieren der Aktuatoreinrichtung 18 können als Einstellungsdaten Steuerdaten zum Verfahren beziehungsweise Bewegen der Plattformvorrichtung 36 und der Trennwandeinrichtung 38 ermittelt werden. Hierzu können die in S3 festgelegten Einstellungsdaten zum Beispiel beschreiben, um wie viele Zentimeter die Plattformvorrichtung 36 angehoben werden soll, beziehungsweise welche absolute Höhe sie haben soll. Für die Trennwandeinrichtung 38 können die Einstellungsdaten beispielsweise beschreiben, in welche Richtung und/oder wie weit das beispielhafte Trennwandelement von der Hauswand wegbewegt werden soll. Hierzu wird eine Parkposition des Kraftfahrzeugs 22 festgelegt (S4), und hierzu können beispielsweise fest vorgegebene Koordinaten wie zum Beispiel der Abstand und die Position in Bezug auf die Hauswand bereitgestellt werden.

In Verfahrensschritt S5 erzeugt die Schnittstelleneinrichtung 24 ein Steuersignal, das dann an die zweite Aktuatoreinrichtung 18 übertragen wird (S6).

Vor oder während dem Eintreffen des Kraftfahrzeugs 22 (oder danach) kann dann zum Beispiel die Höhe der Plattformvorrichtung in Abhängigkeit von dem Steuersignal eingestellt werden (S7), und die Trennwandeinrichtung 38 kann ausgefahren werden, sodass sie eine Brücke oder eine Gangway zwischen Haus und Kraftfahrzeug 22 bilden kann (S7). Die Bewegungsrichtungen der beispielhaften Plattformvorrichtung 36 und der Trennwandeinrichtung 38 sind in der Figur als Pfeile dargestellt.

Ein Verkleidungselement (in der Figur nicht gezeigt), das beispielhafte Sideboard, kann beispielsweise zusätzlich ausgefahren werden, wobei das Verkleidungselement in der Ruheposition zum Beispiel an der Hauswand angebracht sein oder an einer Garageninnenseite und in der Abschirmposition das Kraftfahrzeug 22 vollständig abschirmen kann.

Wird alternativ (oder zusätzlich) eine Kraftfahrzeughöhe angepasst, weist also zum Beispiel das Gebäude 12 keine Plattformvorrichtung 36 und keine Trennwandeinrichtung 38 auf, ist aber das Kraftfahrzeug 22 entsprechend ausgestaltet, kann das Kraftfahrzeug 22 über zum Beispiel die Verwendung einer Luftfeder hochgehoben werden, um auf Höhe einer Stufe des Gebäudes 12 zu sein, oder entsprechend abgesenkt werden. Eine Trennwandeinrichtung 38 des Kraftfahrzeugs 22 kann zum Beispiel in einer Außenhaut des Kraftfahrzeugs 22 eingelassen oder darin angeordnet sein und in der Abschirmposition beispielsweise über einen Seilzug entfaltet werden. Beim Einstellen der Kraftfahrzeughöhe (S8) und beim Bewegen der Trennwandeinrichtung 38 des Kraftfahrzeugs 22 wird das erzeugte Steuersignal dann von der Schnittstelleneinrichtung 24 an das Kraftfahrzeug 22 übertragen (S6).

Insbesondere bei diesen Beispielen werden die Vorteile durch eine gezielte Kommunikation zwischen dem Gebäude 12 und dem Kraftfahrzeug 22 über die Schnittstelleneinrichtung 24 erreicht.

Je nachdem, ob die Energiespeichervorrichtung des Gebäudes 12 oder die Energiespeichereinrichtung 40 des Kraftfahrzeugs 22 neu konfiguriert wird, kann die Aktuatoreinrichtung 16 oder die Energiespeichereinrichtung 40 als Stromquelle dienen, die den jeweils anderen Part aufladen kann (S9). Alternativ kann eine der beiden Komponenten als Stromquelle dienen, zum Beispiel die Energiespeichereinrichtung 40 des Kraftfahrzeugs 22, falls das Gebäude 12 zum Beispiel ein sogenanntes "autarkes Haus" mit eigener Stromversorgung aus Solarstrom ist, die Energiespeichervorrichtung 16 des Gebäudes 12 jedoch aufgrund lang anhaltendem schlechten Wetter wenig Energie gespeichert haben kann. Das Kraftfahrzeug 22 kann dann als "mobile Batterie" verwendet werden und zum Beispiel Strom in die Aktuatoreinrichtung 15 des Gebäudes 12, also die beispielhafte Klimaanlage, übertragen, um die beispielhafte Klimaanlage zu betreiben (S10). Die Schnittstelleneinrichtung 24 kann dann beispielsweise mit einer Leistungselektronik der Energiespeichereinrichtung kommunizieren und die Stromabgabe regulieren.

Wird eine Temperatur des Kraftfahrzeugs 22 durch die beispielhafte Klimaanlage des Gebäudes 12 reguliert, kann, wie bereits weiter oben beschrieben, ein Anschluss einer Wasserleitung an ein Wasserleitsystem des Kraftfahrzeugs 22 erfolgen und zum Beispiel warmes Wasser oder ein Kühlwasser von dem Kreislauf des Gebäudes 12 in den Kreislauf des Kraftfahrzeugs 22 geleitet werden.

Die Koordination der Klimaregulierung des Kraftfahrzeugs 22 kann dann dahingehend erfolgen, dass die Einstellungsdaten, die eine Soll-Innentemperatur des Kraftfahrzeugs 22 beschreiben können, in Abhängigkeit von zum Beispiel einer aktuellen Innentemperatur des Gebäudes 12 festgelegt werden können (S3).

Gemäß einem weiteren Ausführungsbeispiel kann der Benutzer des Kraftfahrzeugs 22 zum Beispiel von einem Klassikkonzert nach Hause gefahren kommen und im Kraftfahrzeug klassische Musik hören. Entsprechend kann ein Entertainmentprogramm im Gebäude 12 angepasst werden (S11) und/oder eine Innenraumbeleuchtung (S12) über zum Beispiel Regulieren einer Lichtanlage und dadurch Einstellen eines gedämpften Lichts im Gebäude sowie ein Anpassen einer Temperatur (S13) über zum Beispiel Regulieren eines Heizsystems. Analog hierzu kann das Verfahren beispielhaft vorsehen, dass Innenraumtemperatur, Innenraumbeleuchtung und Entertainmentprogramm des Kraftfahrzeugs 22 entsprechend den Einstellungen im Gebäude 12 angepasst werden, zum Beispiel wenn der Benutzer morgens aus dem Haus geht und ins Kraftfahrzeug 22 steigt, um zum Beispiel zur Arbeit oder in den Urlaub zu fahren.

Gemäß einem weiteren Beispiel kann ein Bildschirm 34 der Aktuatoreinrichtung 14 des Gebäudes 12 und/oder ein Bildschirm 34 des Infotainmentsystems der Aktuatoreinrichtung 20 des Kraftfahrzeugs 22 zum Beispiel eine Synchronisation von einem Kühlschrank 44 des Gebäudes 12 und eines Kühlschranks 46 des Kraftfahrzeugs 22 durchführen und hierzu können zum Beispiel zunächst die jeweiligen Kühlschrankinhalte erfasst werden (S14). Hierzu kann zum Beispiel ein Datenspeicher des jeweiligen Kühlschranks 44, 46 ausgelesen werden, indem zum Beispiel elektronisch erfasst sein kann, welche Lebensmittel sich in dem jeweiligen Kühlschrank 44, 46 befinden. Vorzugsweise kann hierzu zum Beispiel ein Signal eines jeweiligen Scanners empfangen und ausgelesen werden, wobei der Scanner zum Beispiel im Kühlschrankinneren angeordnet sein und zum Beispiel Barcodes der Lebensmittel erfassen und auslesen kann.

Beim Vergleichen der Inhalte kann zum Beispiel festgestellt werden, dass bevorzugte Lebensmittel des Benutzers zwar im Gebäude 12, jedoch nicht im Kraftfahrzeug 22 vorhanden sind. Eine entsprechende Information kann zum Beispiel erzeugt werden (S16) und durch die Ausgabevorrichtung mittels des Bildschirms 34 angezeigt werden (S16).

Insgesamt zeigen die Beispiele, wie durch die Erfindung eine Vorrichtung beziehungsweise ein System zur technischen Anpassung eines Mobils, also eines Kraftfahrzeugs 22, an eine Immobilie, also zum Beispiel ein Gebäude 12, und entsprechend entgegengesetzt bereitgestellt und ermöglicht wird. Der Kern ist eine technische Anpassung des Kraftfahrzeugs 22 und/oder die technische Anpassung des Gebäudes 12, sodass beide Bereiche gemeinsam optimal abgestimmt und genutzt werden können.

Mögliche technische Anpassungen an Kraftfahrzeug 22 können, alleine oder in beliebiger Kombination, sein:
- Einstellung einer Eingangshöhe durch das Kraftfahrzeug 22; und/oder
- Verbindung der elektrischen Verbraucher vom Kraftfahrzeug 22 mit dem Gebäude 12, zum Beispiel einem Haus - vorzugsweise kann sich die Schnittstelleneinrichtung 24 dabei am Kraftfahrzeug 22 befinden (Ergänzung Smarthome); und/oder
- Anpassung Licht, Musik, Entertainment im Kraftfahrzeug 22; und/oder
- die Energiespeichereinrichtung 40 des Kraftfahrzeugs 22, zum Beispiel eine Batterie, kann vorzugsweise über den Hausanschluss geladen werden; und/oder
- Verbindung hinsichtlich Klimaanlage (Versorgung des Kraftfahrzeugs 22 mit Energie vom Haus); und/oder
- Abgleich, was befindet sich in beiden Kühlschränken 44, 46 (zum Beispiel eine Anzeige für den Benutzer); und/oder
- Verbindung des Kraftfahrzeugs mit dem beispielhaften Haus mittels umlaufendem isoliertem Faltenbalg.

Mögliche technische Anpassungen der Immobilie, also des Gebäudes 12, können, allein oder in beliebiger Kombination, sein:
- Einstellung der Eingangshöhe durch Immobilie; und/oder
- Verbindung der elektrischen Verbraucher vom Haus mit dem Kraftfahrzeug 22 - Schnittstelle befindet sich im Haus (Ergänzung Smarthome); und/oder
- Anpassung Licht, Musik, Entertainment im Haus; und/oder
- die Energiespeichervorrichtung, vorzugsweise eine Batterie, des beispielhaften Gebäudes 12 kann über das Kraftfahrzeug 22 gespeist werden; und/oder
- Verbindung hinsichtlich Klimaanlage (Versorgung des Gebäudes 12 mit Energie vom Kraftfahrzeug 22); und/oder
- Abgleich, was befindet sich in beiden Kühlschränken 44, 46 (zum Beispiel Anzeige für den Benutzer), gegebenenfalls kann eine Verbindung dieser beiden hergestellt werden, zum Beispiel ein Kühlkreislauf; und/oder
- Verbindung des Kraftfahrzeugs 22 mit dem Haus mittels umlaufendem isoliertem Faltenbalg; und/oder
- mechanische Verbindung der beiden Komponenten (zum Beispiel Sideboard vom Gebäude 12 fährt automatisch ein Stück in das Kraftfahrzeug 22, so wäre der beispielhafte Faltenbalg nicht mehr sichtbar).

Es ergeben sich die oben genannten Vorteile.

Gemäß einer weiteren, beispielhaften technischen Umsetzung kann zum Beispiel das ganze System im Kraftfahrzeug 22 technisch über diverse Teilsysteme umgesetzt werden. Diese können sehr vielfältig ausgeführt sein.

## Patentansprüche

1. Verfahren zum Koordinieren einer ersten Aktuatoreinrichtung (14, 15, 16, 18, 20) und einer zweiten Aktuatoreinrichtung (14, 15, 16, 18, 20), wobei eine der Aktuatoreinrichtungen (20) ein Kraftfahrzeugsystem und die andere Aktuatoreinrichtung (14, 15, 16, 18) ein kraftfahrzeugexternes Gerät, das an einem Gebäude (12) angeordnet ist, umfasst; und wobei das Verfahren von einer Schnittstelleneinrichtung (24) durchgeführt wird, die eine Datenkommunikationsschnittstelle zwischen den Aktuatoreinrichtungen (14, 15, 16, 18, 20) bildet,
wobei das Verfahren die folgenden aufweist:
- Feststellen einer aktuellen Konfiguration der ersten Aktuatoreinrichtung (14, 15, 16, 18, 20, S1),
- in Abhängigkeit von der festgestellten Konfiguration der ersten Aktuatoreinrichtung (14, 15, 16, 18, 20): Festlegen der zweiten Aktuatoreinrichtung (14, 15, 16, 18, 20) als an die festgestellte Konfiguration der ersten Aktuatoreinrichtung (14, 15, 16, 18, 20) anzupassende Aktuatoreinrichtung (14, 15, 16, 18, 20, S2),
- anhand der festgestellten Konfiguration der ersten Aktuatoreinrichtung (14, 15, 16, 18, 20): Festlegen Einstellungsdaten zum Konfigurieren der zweiten Aktuatoreinrichtung (14, 15, 16, 18, 20, S3),
- Erzeugen eines Steuersignals, das die festgelegten Einstellungsdaten beschreibt (S5), und
- Übertragen des erzeugten Steuersignals an die zweite Aktuatoreinrichtung (14, 15, 16, 18, 20) zum Konfigurieren der zweiten Aktuatoreinrichtung (14, 15, 16, 18, 20, S6);
**dadurch gekennzeichnet, dass** das Steuern der zweiten Aktuatoreinrichtung (20) umfasst:
- Festlegen einer Parkposition des Kraftfahrzeugs (22) am Gebäude (12, S4), und, anhand der festgelegten Parkposition: Bewegen einer Trennwandeinrichtung des Kraftfahrzeugs (22) aus einer Ruheposition, in der ein Wandelement der Trennwandeinrichtung an dem Kraftfahrzeug (22) oder in dem Kraftfahrzeug (22) angeordnet ist, in eine Abschirmposition (S7), in der sich das Wandelement zwischen dem Kraftfahrzeug (22) und einer Wand des Gebäudes (12) erstreckt.

2. Verfahren nach Anspruch 1, wobei
das Steuern der zweiten Aktuatoreinrichtung (14, 15, 16, 18) umfasst:
- Einstellen einer Kraftfahrzeughöhe durch Ändern einer aktuellen Kraftfahrzeughöhe mittels einer Hebeeinrichtung des Kraftfahrzeugs (22, S8); und/oder
- Einstellen einer Höhe einer Plattformvorrichtung des Gebäudes (12) durch Ändern einer aktuellen Höhe der Plattformvorrichtung durch eine Hebeeinrichtung des Gebäudes (12, S8); und/oder
- Festlegen einer Parkposition des Kraftfahrzeugs (22) am Gebäude (12, S4), und, anhand der festgelegten Parkposition, Bewegen einer Trennwandeinrichtung des Gebäudes (12, S7) aus einer Ruheposition in eine Abschirmposition, in der sich ein Wandelement der Trennwandeinrichtung zwischen der festgelegten Parkposition und einer Wand des Gebäudes (12) erstreckt; vorzugsweise zusätzlich Bewegen eines Verkleidungselements der Trennwandeinrichtung zum Verkleiden des Trennwandelements.

3. Verfahren nach einem der vorhergehenden Ansprüche, wobei
das Steuern der zweiten Aktuatoreinrichtung (20) ein elektrisches Verbinden einer Energiespeichervorrichtung des Gebäudes (12) mit dem Kraftfahrzeugsystem umfasst, vorzugsweise zum:
- Aufladen einer Energiespeichereinrichtung (40) des Kraftfahrzeugs (22, S9); und/oder
- Betreiben des Kraftfahrzeugsystems mittels von der Energiespeichervorrichtung des Gebäudes (12) übertragenen Energie (S10, vorzugsweise einer Klimaanlage des Kraftfahrzeugs (22), insbesondere zum Anpassen einer aktuellen Innentemperatur des Kraftfahrzeugs (22) an eine aktuelle Innentemperatur des Gebäudes (12) oder eines Gebäudeteils.

4. Verfahren nach einem der vorhergehenden Ansprüche, wobei das Steuern der zweiten Aktuatoreinrichtung (14, 15, 16, 18) ein elektrisches Verbinden einer Energiespeichereinrichtung (40) des Kraftfahrzeugs (22) mit einer Energiespeichervorrichtung des kraftfahrzeugexternen Geräts umfasst, vorzugsweise zum:
- Aufladen der Energiespeichervorrichtung des kraftfahrzeugexternen Geräts (S9); und/oder
- Betreiben des kraftfahrzeugexternen Geräts mittels von der Energiespeichereinrichtung (40) des Kraftfahrzeugs (22) übertragenen Energie (S10), vorzugsweise einer Klimaanlage des Gebäudes (12), insbesondere zum Anpassen einer aktuellen Innentemperatur des Gebäudes (12) oder eines Gebäudeteils an eine aktuelle Innentemperatur des Kraftfahrzeugs (22).

5. Verfahren nach einem der vorhergehenden Ansprüche, wobei die zweite Aktuatoreinrichtung (20) ein Infotainmentsystem des Kraftfahrzeugs (22) umfasst, und wobei das Steuern der zweiten Aktuatoreinrichtung (20) umfasst:
- Anpassen einer aktuellen Innentemperatur des Kraftfahrzeugs (22) an eine aktuelle Innentemperatur des Gebäudes (12) oder eines Gebäudeteils (S13); und/oder
- Anpassen einer Innenraumbeleuchtung des Kraftfahrzeugs (22) an eine aktuelle Innenraumbeleuchtung des Gebäudes (12) oder eines Gebäudeteils (S12); und/oder
- Anpassen eines Entertainmentprogramms im Innenraum des Kraftfahrzeugs (22) an ein aktuelles Entertainmentprogramm im Gebäudes (12) oder in einem Gebäudeteil (S11).

6. Verfahren nach einem der vorhergehenden Ansprüche, wobei die zweite Aktuatoreinrichtung (14, 15, 16, 18) ein Entertainmentsystem des Gebäudes umfasst, und wobei das Steuern der zweiten Aktuatoreinrichtung (14, 15, 16, 18) umfasst:
- Anpassen einer aktuellen Innentemperatur des Gebäudes (12) oder eines Gebäudeteils an eine aktuelle Innentemperatur des Kraftfahrzeugs (22, S13); und/oder
- Anpassen einer Innenraumbeleuchtung des Gebäudes (12) oder in eines Gebäudeteils an eine aktuelle Innenraumbeleuchtung des Kraftfahrzeugs (22, S12); und/oder
- Anpassen eines Entertainmentprogramms im Innenraum des Gebäudes (12) oder in einem Gebäudeteil an ein aktuelles Entertainmentprogramm im Kraftfahrzeugs (22, S11).

7. Verfahren nach einem der vorhergehenden Ansprüche, wobei die Schnittstelleneinrichtung (24) durchführt:
- Erfassen eines Inhalts eines Kühlschrank des Kraftfahrzeugs (22, S14),
- Erfassen eines Inhalts eines Kühlschrank des Gebäudes (12, S14),
- Vergleichen der erfassten Inhalte (S15), und
- Bereitstellen einer Information zu einem Ergebnis des Vergleichs durch eine Ausgabevorrichtung, wobei die Ausgabevorrichtung die Aktuatoreinrichtung (14, 15, 16, 18, 20) diejenige des Kraftfahrzeugs (22) und/oder des Gebäudes (12, S16) ist.

8. Schnittstelleneinrichtung (24), die dazu eingerichtet ist, ein Verfahren nach einem der vorhergehenden Ansprüche durchzuführen.

9. Servereinrichtung (26) zum Betreiben im Internet, aufweisend eine Schnittstelleneinrichtung (24) nach Anspruch 8.

10. Kraftfahrzeug (22), das eine Schnittstelleneinrichtung (24) nach Anspruch 8 aufweist.

11. Gebäude (12), das eine Schnittstelleneinrichtung (24) nach Anspruch 8 aufweist.

12. System (10), aufweisend mindestens eine Aktuatoreinrichtung (14, 15, 16, 18), die ein kraftfahrzeugexternes Gerät eines Gebäudes (12) umfasst, mindestens eine Aktuatoreinrichtung (20) eines Kraftfahrzeugs (22), und eine Schnittstelleneinrichtung (24) nach Anspruch 8.

## Claims

1. Method for coordinating a first actuator device (14, 15, 16, 18, 20) and a second actuator device (14, 15, 16, 18, 20), wherein one of the actuator devices (20) comprises a motor vehicle system and the other actuator device (14, 15, 16, 18) comprises an motor vehicle-external device that is arranged on a building (12); and wherein the method is performed by an interface device (24) that forms a data communication interface between the actuator devices (14, 15, 16, 18, 20), the method having the following:
- detecting a current configuration of the first actuator device (14, 15, 16, 18, 20, S1),
- depending on the detected configuration of the first actuator device (14, 15, 16, 18, 20): determining the second actuator device (14, 15, 16, 18, 20) as an actuator device (14, 15, 16, 18, 20, S2) to be adapted to the detected configuration of the first actuator device (14, 15, 16, 18, 20),
- based on the detected configuration of the first actuator device (14, 15, 16, 18, 20): determining settings data for configuring the second actuator device (14, 15, 16, 18, 20, S3),
- generating a control signal describing the determined settings data (S5), and
- transmitting the generated control signal to the second actuator device (14, 15, 16, 18, 20) for configuring the second actuator device (14, 15, 16, 18, 20, S6); **characterised in that** control of the second actuator device (20) comprises:
- determining a parking position of the motor vehicle (22) at the building (12, S4), and, based on the determined parking position: moving a partition device of the motor vehicle (22) from a rest position, in which a wall element of the partition device is arranged at the motor vehicle (22) or in the motor vehicle (22), to a shielding position (S7), in which the wall element extends between the motor vehicle (22) and a wall of the building (12).

2. Method according to claim 1, wherein the control of the second actuator device (14, 15, 16, 18) comprises:
- setting a motor vehicle height by changing a current motor vehicle height by means of a lifting device of the motor vehicle (22, S8); and/or
- setting a height of a platform device of the building (12) by changing a current height of the platform device by a lifting device of the building (12, S8); and/or
- determining a parking position of the motor vehicle (22) at the building (12, S4), and, based on the determined parking position, moving a partition device of the building (12, S7) from a rest position to a shielding position in which a wall element of the partition device extends between the determined parking position and a wall of the building (12); preferably additionally moving a cladding element of the partition device for cladding the partition element.

3. Method according to any one of the preceding claims, wherein the control of the second actuator device (20) comprises electrically connecting an energy storage device of the building (12) to the motor vehicle system, preferably for:
- charging an energy storage device (40) of the motor vehicle (22, S9); and/or
- operating the motor vehicle system by means of energy transmitted from the energy storage device of the building (12) (S10), preferably an air conditioning system of the motor vehicle (22), in particular for adapting a current interior temperature of the motor vehicle (22) to a current interior temperature of the building (12) or a part of the building.

4. Method according to any one of the preceding claims, wherein the control of the second actuator device (14, 15, 16, 18) comprises electrically connecting an energy storage device (40) of the motor vehicle (22) to an energy storage device of the motor vehicle-external device to the motor vehicle, preferably for:
- charging the energy storage device of the motor vehicle-external device (S9); and/or
- operating the motor vehicle-external device by means of energy transmitted from the energy storage device (40) of the motor vehicle (22) (S10), preferably an air conditioning system of the building (12), in particular for adapting a current interior temperature of the building (12) or a part of the building to a current interior temperature of the motor vehicle (22).

5. Method according to any one of the preceding claims, wherein the second actuator device (20) comprises an infotainment system of the motor vehicle (22), and wherein the control of the second actuator device (20) comprises:
- adapting a current interior temperature of the motor vehicle (22) to a current interior temperature of the building (12) or a part of the building (S13); and/or
- adapting an interior lighting of the motor vehicle (22) to a current interior lighting of the building (12) or a part of the building (S12); and/or
- adapting an entertainment programme in the interior of the motor vehicle (22) to a current entertainment programme in the building (12) or in a part of the building (S11).

6. Method according to any one of the preceding claims, wherein the second actuator device (14, 15, 16, 18) comprises an entertainment system of the building, and wherein the control of the second actuator device (14, 15, 16, 18) comprises:
- adapting a current interior temperature of the building (12) or a part of the building to a current interior temperature of the motor vehicle (22, S13); and/or
- adapting an interior lighting of the building (12) or in a part of the building to a current interior lighting of the motor vehicle (22, S12); and/or
- adapting an entertainment programme in the interior of the building (12) or in a part of the building to a current entertainment programme in the motor vehicle (22, S11).

7. Method according to any one of the preceding claims, wherein the interface device (24) performs:
- recording a content of a refrigerator of the motor vehicle (22, S14),
- recording a content of a refrigerator of the building (12, S14),
- comparing the detected contents (S15), and
- providing information on a result of the comparison by an output apparatus, wherein the output apparatus is the actuator device (14, 15, 16, 18, 20) of the motor vehicle (22) and/or the building (12, S16).

8. Interface device (24) adapted to perform a method according to any one of the preceding claims.

9. Server device (26) for operating on the internet, having an interface device (24) according to claim 8.

10. Motor vehicle (22), which has an interface device (24) according to claim 8.

11. Building (12), which has an interface device (24) according to claim 8.

12. System (10) having at least one actuator device (14, 15, 16, 18), which comprises a motor vehicle-external device of a building (12), at least one actuator device (20) of a motor vehicle (22), and an interface device (24) according to claim 8.

## Revendications

1. Procédé de coordination d'un premier dispositif actionneur (14, 15, 16, 18, 20) et d'un second dispositif actionneur (14, 15, 16, 18, 20), dans lequel un des dispositifs actionneurs (20) comprend un système de véhicule automobile et l'autre dispositif actionneur (14, 15, 16, 18) comprend un dispositif externe au véhicule automobile qui est disposé sur un bâtiment (12) ; et dans lequel le procédé est mis en œuvre par un dispositif d'interface (24) qui forme une interface de communication de données entre les dispositifs actionneurs (14, 15, 16, 18, 20), dans lequel le procédé présente ce qui suit :
- détermination d'une configuration actuelle du premier dispositif actionneur (14, 15, 16, 18, 20, S1),
- en fonction de la configuration déterminée du premier dispositif actionneur (14, 15, 16, 18, 20) : détermination du second dispositif actionneur (14, 15, 16, 18, 20) en tant que dispositif actionneur (14, 15, 16, 18, 20, S2) à adapter à la configuration déterminée du premier dispositif actionneur (14, 15, 16, 18, 20),
- à l'aide de la configuration déterminée du premier dispositif actionneur (14, 15, 16, 18, 20) : détermination de données de réglage pour configurer le second dispositif actionneur (14, 15, 16, 18, 20, S3),
- génération d'un signal de commande qui décrit les données de réglage déterminées (S5), et
- transmission du signal de commande généré au second dispositif actionneur (14, 15, 16, 18, 20) pour configurer le second dispositif actionneur (14, 15, 16, 18, 20, S6) ;
**caractérisé en ce que** la commande du second dispositif actionneur (20) comprend :
- la détermination d'une position de stationnement du véhicule automobile (22) sur le bâtiment (12, S4) et, à l'aide de la position de stationnement déterminée : le déplacement d'un dispositif de paroi de séparation du véhicule automobile (22) d'une position de repos, dans laquelle un élément de paroi du dispositif de paroi de séparation est disposé sur le véhicule automobile (22) ou dans le véhicule automobile (22), dans une position de protection (S7), dans laquelle l'élément de paroi s'étend entre le véhicule automobile (22) et une paroi du bâtiment (12).

2. Procédé selon la revendication 1, dans lequel la commande du second dispositif actionneur (14, 15, 16, 18) comprend :
- le réglage d'une hauteur de véhicule automobile en modifiant une hauteur de véhicule automobile actuelle au moyen d'un dispositif de levage du véhicule automobile (22, S8) ; et/ou
- le réglage d'une hauteur d'un dispositif de plateforme du bâtiment (12) en modifiant une hauteur actuelle du dispositif de plateforme par un dispositif de levage du bâtiment (12, S8) ; et/ou
- la détermination d'une position de stationnement du véhicule automobile (22) sur le bâtiment (12, S4) et, à l'aide de la position de stationnement déterminée, le déplacement d'un dispositif de paroi de séparation du bâtiment (12, S7) d'une position de repos à une position de protection, dans laquelle un élément de paroi du dispositif de paroi de séparation s'étend entre la position de stationnement déterminée et une paroi du bâtiment (12) ; de préférence, le déplacement en outre d'un élément d'habillage du dispositif de paroi de séparation pour habiller l'élément de paroi de séparation.

3. Procédé selon l'une quelconque des revendications précédentes, dans lequel la commande du second dispositif actionneur (20) comprend une connexion électrique d'un dispositif de stockage d'énergie du bâtiment (12) au système de véhicule automobile, de préférence pour :
- charger un dispositif de stockage d'énergie (40) du véhicule automobile (22, S9) ; et/ou
- faire fonctionner le système de véhicule automobile au moyen de l'énergie (S10) transmise par le dispositif de stockage d'énergie du bâtiment (12), de préférence un climatiseur du véhicule automobile (22), en particulier pour adapter une température intérieure actuelle du véhicule automobile (22) à une température intérieure actuelle du bâtiment (12) ou d'une partie de bâtiment.

4. Procédé selon l'une quelconque des revendications précédentes, dans lequel la commande du second dispositif actionneur (14, 15, 16, 18) comprend une connexion électrique d'un dispositif de stockage d'énergie (40) du véhicule automobile (22) à un dispositif de stockage d'énergie de l'appareil externe au véhicule automobile, de préférence pour :
- charger le dispositif de stockage d'énergie de l'appareil externe au véhicule automobile (S9) ; et/ou
- faire fonctionner l'appareil externe au véhicule automobile au moyen de l'énergie (S10) transmise par le dispositif de stockage d'énergie (40) du véhicule automobile (22), de préférence un climatiseur du bâtiment (12), en particulier pour adapter une température intérieure actuelle du bâtiment (12) ou d'une partie de bâtiment à une température intérieure actuelle du véhicule automobile (22).

5. Procédé selon l'une quelconque des revendications précédentes, dans lequel le second dispositif actionneur (20) comprend un système d'infodivertissement du véhicule automobile (22), et dans lequel la commande du second dispositif actionneur (20) comprend :
- adapter une température intérieure actuelle du véhicule automobile (22) à une température intérieure actuelle du bâtiment (12) ou d'une partie de bâtiment (S13) ; et/ou
- adapter un éclairage intérieur du véhicule automobile (22) à un éclairage intérieur actuel du bâtiment (12) ou d'une partie de bâtiment (S12) ; et/ou
- adapter un programme de divertissement dans l'habitacle du véhicule automobile (22) avec un programme de divertissement actuel dans le bâtiment (12) ou dans une partie de bâtiment (S11).

6. Procédé selon l'une quelconque des revendications précédentes, dans lequel le second dispositif actionneur (14, 15, 16, 18) comprend un système de divertissement du bâtiment, et dans lequel la commande du second dispositif actionneur (14, 15, 16, 18) comprend :
- adapter une température intérieure actuelle du bâtiment (12) ou d'une partie de bâtiment à une température intérieure actuelle du véhicule automobile (22, S13) ; et/ou
- adapter un éclairage intérieur du bâtiment (12) ou d'une partie de bâtiment à un éclairage intérieur actuel du véhicule automobile (22, S12) ; et/ou
- adapter un programme de divertissement à l'intérieur du bâtiment (12) ou dans une partie de bâtiment à un programme de divertissement actuel dans le véhicule automobile (22, S11).

7. Procédé selon l'une quelconque des revendications précédentes, dans lequel le dispositif d'interface (24) met en œuvre :
- la détection d'un contenu d'un réfrigérateur du véhicule automobile (22, S14),
- la détection d'un contenu d'un réfrigérateur du bâtiment (12, S14),
- la comparaison des contenus détectés (S15), et
- la fourniture d'une information sur un résultat de la comparaison par un dispositif d'émission, dans lequel le dispositif d'émission est le dispositif actionneur (14, 15, 16, 18, 20) du véhicule automobile (22) et/ou du bâtiment (12, S16).

8. Dispositif d'interface (24) qui est configurée pour mettre en œuvre un procédé selon l'une quelconque des revendications précédentes.

9. Dispositif de serveur (26) pour fonctionner sur Internet, présentant un dispositif d'interface (24) selon la revendication 8.

10. Véhicule automobile (22) qui présente un dispositif d'interface (24) selon la revendication 8.

11. Bâtiment (12) qui présente un dispositif d'interface (24) selon la revendication 8.

12. Système (10) présentant au moins un dispositif actionneur (14, 15, 16, 18) qui comprend un appareil externe au véhicule automobile d'un bâtiment (12), au moins un dispositif actionneur (20) d'un véhicule automobile (22), et un dispositif d'interface (24) selon la revendication 8.
